# EUROPÄISCHE PATENTSCHRIFT

(11) **EP 2 546 776 B1**
(45) Veröffentlichungstag und Bekanntmachung des Hinweises auf die Patenterteilung: **12.06.2013**
(21) Anmeldenummer: 11173483.6
(22) Anmeldetag: 11.07.2011
(51) Int. Cl.: G06K 7/10, G06K 7/14, G09F 3/02

(54) **Kamerabasierter Codeleser und Verfahren zu dessen justierter Herstellung**
Camera-based code reader and method for its adjusted manufacture
Lecteur de code basé sur un appareil de prise de vue et son procédé de fabrication ajustée

(43) Veröffentlichungstag der Anmeldung: 16.01.2013
(73) Patentinhaber: SICK AG, 79183 Waldkirch (DE)
(72) Erfinder: Anselment, Christoph, 79183 Waldkirch (DE); Nübling, Ralf Ulrich, 79211 Denzlingen (DE)
(74) Vertreter: Hehl, Ulrich

(56) Entgegenhaltungen:
- EP-A1- 1 814 058
- US-B1- 6 330 973

## Beschreibung

Die Erfindung betrifft einen kamerabasierten Codeleser mit einem Bildsensor, der ein zeilenförmiges Lesefeld zur Aufnahme einer Bildzeile aufweist, sowie ein Herstellungsverfahren zur justierten Herstellung eines kamerabasierten Codelesers nach dem Oberbegriff der Ansprüche.

Die verbreitetsten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. Mit der Weiterentwicklung der digitalen Kameratechnologie werden Barcodescanner zunehmend durch kamerabasierte Codeleser abgelöst. Statt Codebereiche abzuscannen, nimmt ein kamerabasierter Codeleser mit Hilfe eines CCD-Chips Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Eine Zeilenkamera liest die Objektbilder mit den Codeinformationen sukzessive und zeilenweise mit der Relativbewegung ein. Damit die Objekte in beliebiger Orientierung auf dem Förderer angeordnet werden können, sind oft mehrere Codeleser vorgesehen, um Objekte von mehreren oder allen Seiten aufzunehmen.

Da das Umgebungslicht nur in seltenen Fällen ausreichend ist oder wie im Falle von Lesetunneln sogar abgeschirmt ist, wird das Lesefeld zusätzlich ausgeleuchtet. Dazu dient beispielsweise eine Vielzahl von linienförmig angeordneten LEDs, deren Licht durch eine Optik in Querrichtung der Zeile auf deren Breite fokussiert und in Längsrichtung homogenisiert wird. Derartige Optiken sind beispielsweise aus der EP 1 742 168 oder der EP 1 507 228 bekannt. Dabei ist erforderlich, den Empfänger gegenüber der Beleuchtung zu justieren, und es muss eine Schnittstelle zwischen der Kameraeinheit und der Beleuchtungseinheit geschaffen werden.

Eine andere Anforderung ist die schnelle Fokussierung der Empfangsoptik der Zeilenkamera auf den Objektabstand. Dazu sind Lösungen aus der EP 1 513 094 B1 und der EP 1 698 995 B1 bekannt, bei denen ein optisches Element auf einer Schwinge bewegt wird, um die optisch wirksame Bildschnittweite beziehungsweise die Brennweite durch Verschwenken der Schwinge zu verstellen.

EP 1 814 058 offenbart einen zweidimensionalen Bildsensor, der zur Beobachtung der zeitlichen Reaktion eines Farbstoffes auf Blitzlicht eingesetzt wird. Durch den "Rolling Shutter" nehmen die einzelnen Zeilen des Sensors, mithin die einzelnen zeilenförmigen Einzelbildsensoren die Bildzeilen nacheinander auf.

In der erläuterten Anwendung eines auf einer Zeilenkamera basierenden Codelesers, bei denen Objekte über ein Förderband durch das Lesefeld des Codelesers bewegt werden, sollte die Zeilenkamera die gesamte Breite des Förderbandes erfassen können. Dazu wird eine hochauflösende Empfängerzeile in der Kamera benötigt. Solche Empfängerzeilen sind sehr teuer und begrenzen die Auflösung. Da immer breitere Förderbänder verwendet werden, müssen die Kamerasysteme immer größere Lesebereiche abdecken.

Diese bekannten Hochleistungskameras mit einer hochauflösenden Empfängerzeile und einer zugehörigen Beleuchtung sind in Montage und Justierung sehr aufwändig. Das fixe Lesefeld ist schlecht auf Anwendungen anpassbar, in denen unterschiedliche Anforderungen über das Lesefeld hinweg bestehen. Anders ausgedrückt wirken Anpassungen stets auf die Empfängerzeile als Ganzes, so dass unterschiedliche Beleuchtungsanforderungen, Abstände oder dergleichen in Zeilenrichtung, also über die Breite des Förderbandes hinweg, allenfalls im Mittel berücksichtigt werden können. Schließlich ist das Systemgewicht wegen zahlreicher Schnittstellen bei den bekannten Lösungen extrem hoch, beispielsweise je ca. 20 kg für die Kamera und für die zugehörige Beleuchtungseinheit.

Es ist daher Aufgabe der Erfindung, einen kamerabasierten Codeleser zu finden, der einfacher aufgebaut und flexibler in der Anwendung ist. Zugleich soll die Herstellung erleichtert werden.

Diese Aufgabe wird durch einen kamerabasierten Codeleser und ein Verfahren gemäss den unabhängigen Ansprüchen gelöst. Dabei geht die Erfindung von dem Grundgedanken aus, den bisher einheitlichen, hochauflösenden Bildsensor durch mehrere einfachere Bildsensoren mit kleinerem Erfassungsbereich zu ersetzen. Somit ist der Bildsensor modular aufgebaut.

Die Erfindung hat den Vorteil, dass durch den modularen Aufbau eine praktisch beliebige Länge des zeilenförmigen Lesefeld erreicht wird. Dabei wird eine teure, einzelne Empfängerzeile durch mehrere auch in ihrer Gesamtheit viel günstigere Einzeibildsensoren ersetzt. Durch den modularen Aufbau ist das System skalierbar und kann hochflexibel für verschiedene Anwendungen ausgelegt werden. Zugleich sind unterschiedliche Einstellungen für die Einzelbildsensoren möglich, wodurch die Flexibilität nochmals erhöht wird. Wegen der vorteilhaften Verteilung von mehreren Kameras anstelle einer einzigen zentralen Kamera ist auch der V-förmige Erfassungsbereich je Kamera in den Öffnungswinkeln begrenzt. Das führt zu erheblichen Vorteilen gegenüber Verschattungen und damit zu verbesserter Abbildungsqualität.

Die Auswertungseinheit fügt Bilddaten der Einzelbildsensoren zu einer Bildzeile zusammen. Dieses Zusammenfügen kann beispielsweise hartcodiert oder per Software erfolgen. Die Einzelbildsensoren haben jeweils Einzellesefelder, die in sich zeilenförmig, aber kürzer als die insgesamt zu erfassende Breite sind. Dabei ist die Überlagerung der Einzellesefelder nicht überlappungsfrei. Die redundante Bildinformation in den Überlappungsbereichen kann von der Auswertungseinheit genutzt werden, um die Bilddaten in der richtigen Weise zu der Bildzeile zusammenzufügen.

Zu beachten ist, dass die Auswertungseinheit somit zwei unterschiedliche Funktionen zum Zusammenfügen von Bilddaten leistet. Einerseits wird aus den unterschiedlichen Ausschnitten des Lesefelds, die von den Einzelbildsensoren erfasst werden, jeweils eine gemeinsame Bildzeile gebildet. Andererseits werden die nacheinander aufgenommenen Bildzeilen zu einem zweidimensionalen Bild verbunden. In einer besonders wichtigen Anwendung, bei dem codetragende Objekte an dem stationär montierten Codeleser vorbei gefördert werden, werden die Objekte somit zeilenweise in mehreren überlappenden Einzellesefenstern abgetastet und aufgenommen. Die Decodiereinheit sucht dann in dem zweidimensionalen Bild nach Codeinformationen und decodiert sie.

Die Einzelbildsensoren weisen eine Vielzahl von zu einer Zeile angeordneten Pixelelementen auf. Die Einzelbildsensoren bilden damit jeweils Zeilenkameras. Üblicherweise ist dafür genau eine Zeile von Pixelelementen vorgesehen. Denkbar sind aber auch mehrere parallele Pixelzeilen. Solange die Pixelzahl in Zeilenrichtung deutlich höher ist als die Anzahl von Pixelzeilen, beispielsweise mehrere hundert Pixel in Zeilenrichtung gegenüber ein bis zehn Pixelzeilen, bleibt das resultierende Lesefeld zeilenförmig.

Die Einzelbildsensoren weisen bevorzugt eine Vielzahl von zu einer Matrix angeordneten Pixelelementen auf, wobei die Auswertungseinheit dafür ausgebildet ist, in einem Einlernmodus eine in einer Zeile angeordnete Teilmenge der Pixelelemente auszuwählen und im Betrieb nur Bilddaten der ausgewählten Pixelelemente zu verwenden. Auf Hardwareebene bilden somit die Einzelbildsensoren in dieser Ausführung Matrix-und nicht Zeilenkameras. Effektiv entstehen aber nach dem abgeschlossenen Einlernprozess Zeilenkameras, indem nur noch die eingelernten Pixelelemente tatsächlich verwendet werden. Die Orientierung und Position der Zeile kann aber im Rahmen der vorhandenen Matrix elektronisch verändert werden, wodurch ein wesentlicher Teil der Justierung von einem mechanischen Prozess auf einen wesentlich flexibleren und einfacher zu handhabenden elektronischen Einlernvorgang verlagert wird. Wie im vorigen Absatz erläutert, können anstelle einer einzigen Zeile auch mehrere parallele Zeilen eingelernt werden, die immer noch effektiv eine Zeilenkamera bilden. Die Orientierung der Zeile folgt vorzugsweise der Zeilenrichtung der vorgegebenen Matrixstruktur, d.h. es wird praktisch ein Teil einer Zeile oder eine ganze Zeile der Matrix ausgewählt. Dann sind die Bilddaten einfacher und schneller auslesbar. Prinzipiell kann die Zeile aber auch eine Spalte der Matrix sein oder sogar gegenüber der Matrixstruktur schräg verlaufen.

Die Einzelbildsensoren sind bevorzugt voneinander gleichmäßig beabstandet und derart auf dem Grundkörper montiert, dass die Zeilen eine gemeinsame Linie bilden. Eine solche gleichmäßige Anordnung erleichtert es, das gewünschte Lesefeld zu überdecken.

Die Beleuchtungseinheit weist bevorzugt eine Elektronikkarte mit einer Vielzahl von Beleuchtungselementen auf, insbesondere LEDs, wobei die Elektronikkarte direkt auf dem Grundkörper montiert ist. Die Beleuchtungselemente sind vorzugsweise jeweils einem Einzelbildsensor zugeordnet. Dies kann beispielsweise durch Zuordnung jeweils einer Elektronikkarte mit Beleuchtungselementen zu einem Einzelbildsensor erfolgen. Auch die Beleuchtungseinheit wird demnach modular aufgebaut. Die Beleuchtungselemente bilden vorteilhafterweise in ihrer Gesamtheit eine oder mehrere Reihen in Zeilenrichtung des Lesefelds.

Die Beleuchtungseinheit weist bevorzugt eine anamorphotische Sendeoptik auf, insbesondere eine oder mehrere Zylinderlinsen, um das Licht auf das zeilenförmige Lesefeld zu bündeln. Es entsteht somit ein zeilenförmiges Beleuchtungsfeld, das nach Möglichkeit gerade dem Lesefeld entspricht. Die verfügbare Lichtleistung wird damit optimal ausgenutzt.

Die Beleuchtungseinheit weist bevorzugt mindestens ein verstellbares optisches Element auf, insbesondere einen beweglichen Spiegel, um den von der Beleuchtungseinheit ausgeleuchteten Bereich auf das zeilenförmige Lesefeld auszurichten. In dieser Ausführungsform kann somit die Beleuchtungseinheit auf den Lichtempfänger justiert werden. Das ermöglicht es, den Lichtempfänger ohne eigenen Justageschritt zu montieren. Die Ausrichtung der Beleuchtungseinheit erfolgt über eine verstellbare Optik, die beispielsweise von einem Spiegelsystem mit einem verschwenkbaren Spiegel und einem Fixspiegel gebildet wird. Dabei wird der Sendestrahl gefaltet und erlaubt dadurch eine besonders platzsparende Anordnung. Der schwenkbare Spiegel kann mit seinen Lagerpunkten ebenfalls auf dem Grundkörper montiert werden. Da die Spiegel nur auf den Sendestrahl wirken und somit keine Einfluss auf eine hochwerte Abbildung für die Bildaufnahme haben, können kostengünstige Spiegelelemente mit verhältnismäßig geringer Oberflächenqualität verwendet werden.

Die Einzelbildsensoren weisen jeweils eine fokussierbare Empfangsoptik auf. Damit können die Einzelbildsensoren scharfe Bilddaten aus unterschiedlichen Entfernungen aufnehmen. Insbesondere weisen die Empfangsoptiken einen Tubus auf, der den Grundkörper durchdringt. Die Öffnung des Tubus' bildet dann vorzugsweise mit den Beleuchtungselementen eine Linienanordnung.

Die Empfangsoptik weist bevorzugt eine Autofokuseinheit mit einem optischen Element, insbesondere einem Spiegel, an einer Schwinge auf, wobei durch Verschwenken der Schwinge die Bildschnittweite oder Brennweite der Empfangsoptik veränderbar ist und wobei die Schwinge über deren Lagerpunkte direkt an dem Grundkörper gehaltert ist. Eine solche Autofokuseinheit entspricht in ihrem Grundkonzept der einleitend diskutierten EP 1 742 168 oder EP 1 507 228. Dadurch kann die Fokuslage sehr schnell und über eine besonders große Zahl von Verstellzyklen verändert werden. Indem die Halterung der Autofokuseinheit direkt auf dem Grundkörper angebracht wird, können höchste Anforderungen an die Justiergenauigkeit mit geringem Aufwand erfüllt werden.

Die Auswertungseinheit ist bevorzugt dafür ausgebildet, die Fokussierung der Empfangsoptiken einzeln einzustellen. Die Möglichkeit unterschiedlicher Einstellungen für die Einzelbildsensoren ist ein weiterer Vorteil des modularen Aufbaus gegenüber einer einzigen Empfängerzeile. Prinzipiell sind weitere Unterschiede möglich, etwa in der Empfangsoptik, in der Empfindlichkeit oder dergleichen.

Die Fokussierung erfolgt vorzugsweise anhand eines vorgegebenen Höhenprofils. Das Höhenprofil ist beispielsweise parametriert, wird eingelernt oder wird von einem in Förderrichtung vorgelagerten weiteren Sensor erfasst. Die an ein Höhenprofil angepasste unterschiedliche Fokussierung für die Einzelbildsensoren ermöglicht das Lesen von relativ zum Codeleser schrägstehenden Objekten oder umgekehrt eine schräge Montage des Codelesers, von Objekten mit einer Höhenkontur über die Lesezeile oder von mehreren nebeneinander geförderten Objekten unterschiedlicher Höhe. Allgemein wird trotz einer vorhandenen Höhenkontur über die Lesezeile, praktisch also meist quer zur Förderrichtung, ein scharfes Bild aufgenommen. Eine einzelne Zeilenkamera müsste in diesen Situationen mit einer einzigen Fokuseinstellung arbeiten, und sofern die Höhenunterschiede über das Lesefeld den Schärfetiefenbereich überschreiten, könnten Teile der Codeinformationen nicht erfasst werden.

Der Grundkörper ist vorzugsweise als Kühlkörper ausgebildet. Dazu können Kühlbleche vorgesehen sein. Der Grundkörper erfüllt somit eine Doppelfunktion als Träger für die Kamera- und Beleuchtungselemente einerseits und als Kühlung für das Gesamtsystem andererseits.

Das erfindungsgemäße Herstellungsverfahren gemäß Anspruch 11 vereinfacht die Justage erheblich. Die Beleuchtung wird lediglich direkt auf dem Grundkörper angebracht. In einem einzigen Montage- und Justageschritt können anschließend die Einzelbildsensoren auf die aktivierte Beleuchtung montiert werden. Dadurch wird die Herstellung einfacher, kostengünstiger und zeigt dennoch höchste Justiergenauigkeit.

Jeweils eine fokusverstellbare Empfangsoptik wird vorzugsweise durch eine Öffnung des Grundkörpers gesteckt und somit zwischen den Beleuchtungselementen vor jedem Einzelbildsensor angeordnet. Die Empfangsoptik ist damit stabil von dem Grundkörper gehaltert und erfasst störungsfrei das von den Beleuchtungselementen erzeugte Beleuchtungsfeld.

Der Codeleser wird bevorzugt in Abstandsrichtung justiert, indem eine Fokustabelle für die erforderliche Fokuseinstellung in Abhängigkeit des Abstands eingelernt wird. Damit ist in einer Z-Richtung die Justage erfolgt, ohne dass mechanische Schritte erfolgen müssten.

Die Beleuchtungseinheit wird bevorzugt durch Verstellen eines einstellbaren optischen Elements der Beleuchtungseinheit, insbesondere eines beweglichen Spiegels, auf das zeilenförmige Lesefeld ausgerichtet. Damit ist keine Justage des Lichtempfängers erforderlich.

In einer bevorzugten Ausführungsform werden Einzelbildsensoren mit einer Vielzahl von zu einer Zeile angeordneten Pixelelementen gleichmäßig zueinander beabstandet derart auf dem Grundkörper montiert, dass die Pixelelemente aller Einzelbildsensoren eine gemeinsame Linie bilden. Damit wird durch die Montage und Justage erreicht, dass sich die Einzellesefelder zu einem gemeinsamen zeilenförmigen Lesefeld überlagern, was also der Justage in der X- und Y-Richtung entspricht.

In einer alternativen bevorzugten Ausführungsform weisen die Einzelbildsensoren eine Vielzahl von zu einer Matrix angeordneten Pixelelementen auf, wobei bei aktivierter Beleuchtungseinheit diejenigen Pixelelemente selektiert werden, die Beleuchtungslicht aus dem Lesefeld empfangen, und wobei die Auswertungseinheit die selektierten Pixelelemente speichert, um im Betrieb nur Bilddaten der selektierten Pixelelemente zu verwenden. Die Montage der matrixförmigen Einzelbildsensoren braucht hier also nur grob ausgerichtet zu erfolgen. Die eigentliche Justierung in der X- und Y-Richtung erfolgt durch das elektronische Einlernen der jeweiligen aktiven Pixelelemente. Eine mechanische Justierung ist damit nicht erforderlich.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung eines kamerabasierten Codelesers mit zeilenförmigen Lesefeld über einem Förderband, auf dem Objekte mit zu lesenden Codes gefördert werden;
- Fig. 2: einen Seitenschnitt durch einen Grundkörper und ein Kameramodul des Codelesers gemäß Figur 1;
- Fig. 3: einen Längsschnitt durch den Grundkörper und die Kameramodule des Codelesers gemäß Figur 1; und
- Fig. 4: eine Ansicht einer weiteren Ausführungsform der Erfindung mit justierbarer Beleuchtungseinheit.

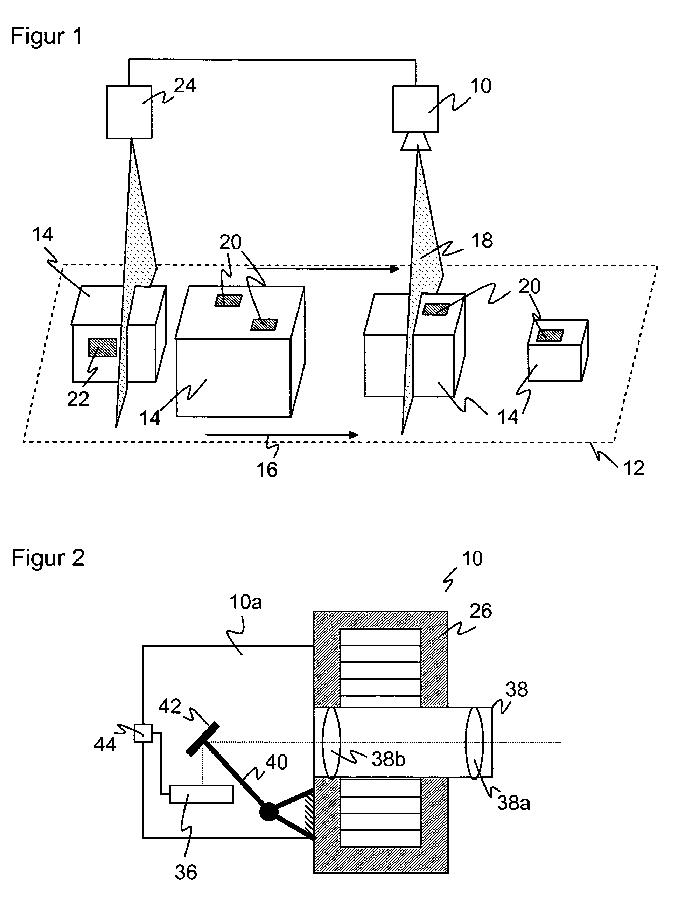

Figur 1 zeigt einen Codeleser 10, der über einem Förderband 12 montiert ist, welches Objekte 14, wie durch den Pfeil 16 angedeutet, durch einen Erfassungsbereich 18 des Codelesers 10 fördert. Die Objekte 14 tragen an ihren Außenflächen Codebereiche 20. Aufgabe des Codelesers 10 ist, die Codebereiche 20 zu erkennen und die dort angebrachten Codes auszulesen, zu dekodieren und dem jeweils zugehörigen Objekt 14 zuzuordnen.

Die Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel.

Der Erfassungsbereich 18 des Codelesers 10 ist, wie auch in Figur 1 dargestellt, eine einzige Ebene und kein Raumausschnitt. Dementsprechend ergibt sich ein zeilenförmiges Lesefeld des Codelesers 10. Indem die Objekte 14 in der Förderrichtung 16 zeilenweise aufgenommen werden, entsteht nach und nach ein Gesamtbild der vorbeigeförderten Objekte 14 samt der Codebereiche 20. Das Zusammenfügen zu einem Gesamtbild ist bei einer gleichmäßigen Förderung der Objekte 14 in stationärem Aufbau relativ einfach zu lösen, besonders wenn die Fördereinrichtung 16 Weg- oder Geschwindigkeitsmessdaten liefert. Es bedarf hierzu dann nicht einmal notwendigerweise intelligenter Algorithmen, welche Anschlussstellen finden oder redundante Bildbereiche eliminieren. Dennoch ist denkbar, den Sensor 10 auch als mobiles Gerät, beispielsweise Handgerät, einzusetzen und jeweils an dem zu lesenden Bereich vorbeizuführen.

Gegenüber der Förderrichtung 16 oberhalb des Codelesers 10 und mit diesem verbunden ist optional ein weiterer Sensor 24 vorgesehen, beispielsweise ein entfernungsmessender Laserscanner. Der Sensor 24 erfasst, bevorzugt ebenfalls zeilenweise, die Höhenkontur der Objekte 14. Diese Information wird an den Codeleser 10 weitergegeben. Dadurch können beispielsweise Objekte 14 als Einzelobjekte erkannt, Bereiche des Förderbandes ohne Objekte 14 vorab als uninteressant markiert oder Fokuseinstellungen vorgenommen werden.

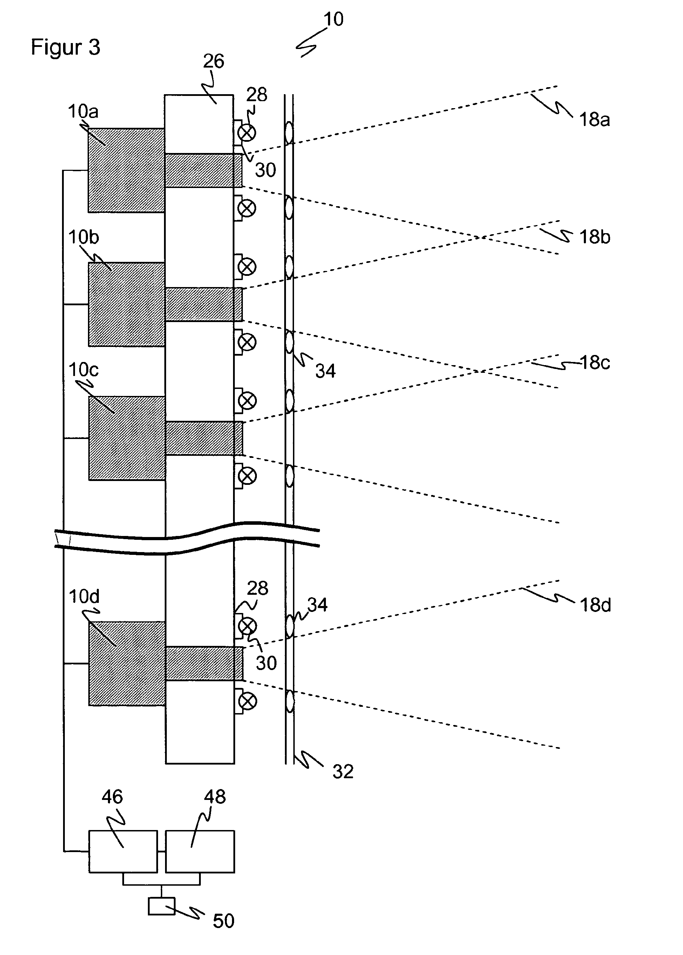

Anhand eines in Figur 2 gezeigten Seitenschnitts und eines in Figur 3 gezeigten Längsschnitts des Codelesers 10 soll dessen modularer Aufbau nun genauer erläutert werden. Der Codeleser 10 weist einen langgestreckten Grundträger oder Grundkörper 26 auf, an dem auf der einen Seite mehrere Kameramodule 10a-d und auf der gegenüberliegenden Seite Elektronikkarten 28 mit Beleuchtungselementen 30 als modulare Beleuchtungseinheiten angebracht sind.

Den Beleuchtungseinheiten 28, 30 ist eine Sendeoptik 32 vorgeordnet, die über nicht gezeigte Abstandselemente mit dem Grundkörper 26 verbunden sein kann, aber auch beispielsweise von einem Gehäuse gehaltert sein kann. Nur symbolisch sind in Figur 3 in der Sendeoptik 32 diverse Linsen 34 eingezeichnet. Die Sendeoptik bildet insgesamt eine anamorphotische Optik, welche das Licht in der einen Richtung senkrecht zur Papierebene möglichst stark bündelt und in einer vertikal dargestellten Richtung homogenisiert. Der Aufbau einer solchen Sendeoptik ist an sich bekannt, und die Erfindung ist nicht auf die dargestellte spezielle Ausführungsform mit Zuordnung je einer Zylinderlinse pro Beleuchtungselement 30 beschränkt.

Jedes Kameramodul 10a-d weist einen ortsaufgelösten Lichtempfänger 36 mit zeilenförmigem Lesefeld auf, beispielsweise einen CCD- oder CMOS-Chip mit einer Vielzahl von lichtempfindlichen Pixelelementen. Eine Empfangsoptik 38 ist mit einem Tubus durch eine Öffnung des Grundkörpers 26 hindurch gesteckt, so dass die Empfangsöffnung zwischen den Beleuchtungselementen 30 liegt und mit diesen gemeinsam eine Linienanordnung über die Längserstreckung des Grundkörpers 26 bildet. Figur 2 zeigt rein beispielhaft zwei Linsen 38a-b als Elemente der Empfangsoptik 38, wobei aber alternativ jegliche Objektivgestaltung mit mehr oder weniger Linsen und mit anderen optischen Elementen denkbar ist.

Eine Autofokuseinheit mit einer Schwinge 40 ist zwischen der Empfangsoptik 38 und dem Lichtempfänger 36 angeordnet. Die Schwinge 40 weist an ihrem einen Ende einen Spiegel 42 auf und ist mit ihrem anderen Ende verschwenkbar gehaltert, wobei die Halterung mit dem Drehpunkt an dem Grundkörper 26 angebracht ist. Bei Schwenkbewegung der Schwinge 40 wird die Lage und Orientierung des Spiegels 42 verändert, so dass der Lichtweg des Empfangslichts von der Empfangsoptik über den Spiegel 42 zu dem Lichtempfänger 36 verlängert oder verkürzt wird. Damit wird die optisch wirksame Bildschnittweite variiert und so die Fokuslage eingestellt. Der Spiegel 42 kann außerdem als Hohlspiegel ausgestaltet sein und so auch die Brennweite der Empfangsoptik beeinflussen.

Die Lichtempfänger 36 eines jeden Kameramoduls 10a-d nehmen Bilddaten aus ihrem jeweiligen Erfassungsbereich 18a-d auf, die über einen Ausgang 44 ausgegeben werden. Die Erfassungsbereiche 18a-d überlappen sich und bilden gemeinsam ein zeilenförmiges Lesefeld, welches über die Anzahl der Kameramodule 10a-d praktisch jede beliebige Länge annehmen kann.

Die Bilddaten der einzelnen Kameramodule 10a-d werden einer Auswertungseinheit 46 zugeführt. Mit Hilfe von Bildauswertungsalgorithmen beziehungsweise unter Ausnutzung der Kenntnis der geometrischen Anordnung und Abstände der Lichtempfänger 36 werden die partiellen Bildzeilen oder Bildzeilenausschnitte, die jedes einzelne Kameramodul 10a-d liefert, zu einer gemeinsamen Bildzeile zusammengefügt. Mit der Relativbewegung der Objekte 14 gegenüber dem Codeleser 10 werden nach und nach eine Vielzahl solcher Bildzeilen erfasst und zu einem zweidimensionalen Bild verarbeitet. Das zweidimensionale Bild ist somit gleich zweifach zusammengefügt: eine gemeinsame Bildzeile über die Förderbandbreite entsteht aus Bilddaten der mehreren Lichtempfänger 36, und ein zweidimensionales Bild aus einer Vielzahl von gemeinsamen Bildzeilen.

Eine Decodiereinheit 48 empfängt ein solches zweidimensionales Bild entweder rollierend oder in gewissen Zeitintervallen, identifiziert Codebereiche 20 und liest die Codeinformationen aus den Codebereichen 20 aus. Anschließend können die decodierten Codeinformationen an einem Ausgang 50 des Codelesers 10 ausgegeben werden.

In der dargestellten Ausführungsform gibt es eine gemeinsame, interne Auswertungseinheit 46 und Decodierungseinheit 48 des Codelesers 10. Dies ist aber rein beispielhaft zu verstehen. Die Auswertungs- und Decodierungsaufgaben können in vielfältiger Weise anders verteilt werden. Beispielsweise kann in jedem Kameramodul 10a-d eine eigene Auswertungseinheit vorgesehen sein, die Vorverarbeitungen leistet und die Schwenkbewegung der Schwinge 40 zur Fokussierung steuert. Denkbar ist weiterhin, dass nur die Auswertungseinheit 46 Teil des Codelesers 10 ist, um zweidimensionale Bilder zu erzeugen und dann als Ganzes oder nur interessierende Ausschnitte davon (ROI, region of interest) über den Ausgang 50 auszugeben. Die Decodierung erfolgt dann extern. Es können aber auch die rohen, unverarbeiteten Bilddaten der Lichtempfänger 36 nach außen gegeben, so dass das Zusammenfügen von Bildzeilen, von zweidimensionalen Bildern und das Decodieren nach extern verlagert ist. Auf ähnliche Weise sind auch andere Verteilungen von Auswertungsaufgaben zwischen den Kameramodulen 10a-d, dem Codeleser 10 selbst und externen Systemen möglich. Zur Klarstellung sei noch ergänzt, dass in dieser Beschreibung eine Auswertungseinheit auch Steuerungsaufgaben erfüllt, beispielsweise Fokusverstellungen oder das Steuern von Aktivität und Intensität der Beleuchtungseinheit 28, 30.

Der Grundkörper 26 bildet eine zentrale Montagebasis für die Kameramodule 10a-d, die Beleuchtungseinheiten 28, 30 sowie nicht dargestellte Gehäuseteile, wobei solche Gehäuseteile einfache Blechteile sein können. Der Grundkörper 26 kann ferner Kühlbleche, Kühlrippen oder dergleichen aufweisen und somit zur zentralen Gerätekühlung ausgebildet sein. Dadurch entfällt die herkömmlich erforderliche Schnittstelle zwischen Kamera und Beleuchtung und somit auch deren Justage zueinander.

Die Justage wird durch den Aufbau des Codelesers 10 und den Grundkörper 26 erheblich vereinfacht. Die Elektronikkarte 28 der Beleuchtungseinheit mit den Beleuchtungselementen 30 sitzt direkt oder mittelbar über sehr genaue Halter auf dem Grundkörper 26. Die Kameramodule 10a-d und die Schwinge 40 der jeweiligen Autofokuseinheiten werden ebenfalls direkt auf dem Grundkörper 26 montiert. Dabei erfolgt unmittelbar mit der Montage die Justierung durch Ausrichtung der Lesefelder der Lichtempfänger 36 auf das Beleuchtungsfeld der eingeschalteten Beleuchtungseinheit 28, 30. Damit wird eine höchste Justagegenauigkeit von den Kameramodulen 10a-d zu der Beleuchtungseinheit 28, 30 in nur einem Justagevorgang gewährleistet.

Aufgrund der direkten Montage und Justage auf dem Grundkörper 26 können mit diesem Aufbau mehrere Kameramodule 10a-d sehr kostengünstig kombiniert werden. Jedes Kameramodule 10a-d erfasst ein eigenes Lesefeld, und die Bilddaten werden anschließend über Bildverarbeitung (image stitching) zusammengefügt.

Ein besonderer Vorteil der mehreren Kameramodule 10a-d liegt in der Möglichkeit, die einzelnen Autofokuseinheiten mit den Schwingen 40 unterschiedlich einzustellen. Damit kann die Fokussierung einem Höhenprofil in dem gemeinsamen zeilenförmigen Lesefeld folgen und so auch eine Höhenkontur in allen Teilbereichen scharf abgebildet werden. Das führt zu einer besseren Bildqualität und damit einer höheren Leserate, beziehungsweise ermöglicht überhaupt erst den Einsatz in Anwendungen, bei denen eine hinreichend flache Objektkontur innerhalb des Lesefelds nicht gegeben ist. Die Höhenkontur kann vorgegeben sein, aber auch im Betrieb von dem Sensor 24 geliefert werden.

Als Lichtempfänger 32 kann alternativ zu einer Pixelzeile auch ein Matrixempfänger mit einer Vielzahl zu einer Matrix angeordneter Pixel eingesetzt werden. Die hat den Vorteil der völligen Justagefreiheit. Der Matrixempfänger wird mit Teilegenauigkeit nur in etwa in der Idealposition montiert. Die zugehörige Empfangsoptik 38 wird auf Anschlag montiert. In Z-Richtung, also in Abstandsrichtung oder längs der optischen Achse der Empfangsoptik 38 wird die erforderliche Einstellung der Autofokuseinheit, also die Verschwenkung der Schwinge 40, über eine Fokustabelle eingelernt. In den dazu senkrechten X- und Y-Richtungen wird die Lage des Lichtbandes bei eingeschalteter Beleuchtungseinheit 28, 30 auf dem Matrixempfänger eingelernt. Im späteren Betrieb werden nur noch die eingelernten Pixel verwendet, die dann effektiv einer ideal justierten Pixelzeile entsprechen.

Anstelle einer Zeile können in der beschriebenen Weise auch mehrere nebeneinander liegende Zeilen eingelernt und zur Auswertung genutzt werden. Es ergibt sich dann immer noch ein längliches, rechteckiges und somit zeilenförmiges Lesefeld. Das Beleuchtungsband muss dann entsprechend breit sein.

Alternativ zu den im Zusammenhang mit den Figuren 2 und 3 beschriebenen Kameramodulen 10a-d können in einer besonders kostengünstigen Lösung nach der Autofokuseinheit auch Standardkameras montiert werden.

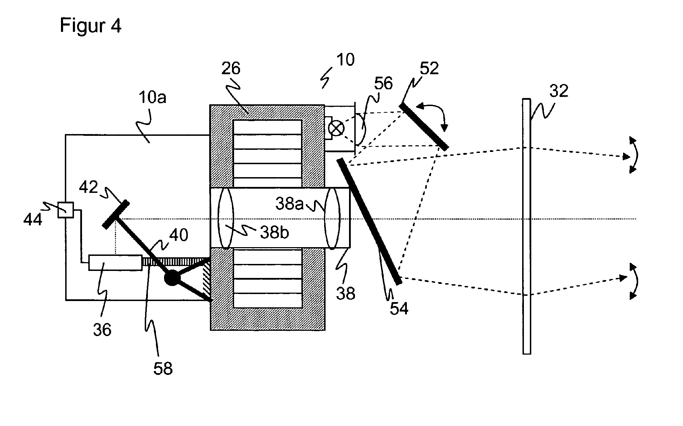

Figur 4 zeigt eine Ansicht einer alternativen Ausführungsform eines Codeleser 10. Dabei bezeichnen wie in allen Figuren gleiche Bezugszeichen die gleichen oder einander entsprechende Merkmale. In dieser Ausführungsform wird den Beleuchtungseinheiten 28, 30, von denen nur eine beispielhaft gezeigt ist, ein optisches Ausrichtungssystem zugeordnet. Ein schwenkbarer Spiegel 52 und ein Fixspiegel 54 falten den Sendestrahl, wobei durch Verschwenken des schwenkbaren Spiegels 52 die Lage des entstehenden Lichtbandes verändert werden kann. Die Schwenkbewegung des schwenkbaren Spiegels 52 und die resultierende Lageänderung des Lichtbandes sind in Figur 4 jeweils durch Doppelpfeile angedeutet.

Der Beleuchtungseinheit 28, 30 ist eine primäre Sendeoptik 56 zu Strahlkollimierung sowie die schon aus Figur 3 bekannte sekundäre Sendeoptik 32 zur Erzeugung eines linienförmigen Lichtbandes zugeordnet. Die konkrete Ausgestaltung der Optikelemente 32, 52, 54, 56 des Sendepfades ist rein beispielhaft zu verstehen. So kann beispielsweise die primäre Sendeoptik 56 entfallen, oder es können zusätzliche Spiegel, Linsen und andere optische Elemente zur Strahlführung und -formung eingesetzt werden. Außerdem ist zu beachten, dass durch die in einer zweidimensionalen Darstellung fehlende Dimension senkrecht zur Zeichenebene scheinbare Überlappungen beispielsweise des Fixspiegels 54 und des Sichtbereichs der Empfangsoptik 38 entstehen.

In der Ausführungsform gemäß Figur 4 kann der Lichtempfänger 36 gänzlich ohne Justage montiert werden. Die Lage des Lichtempfängers 36 gegenüber dem Grundkörper 26 wird mechanisch durch einen mechanischen Anschlag 58 beispielsweise des Gehäuses oder der Elektronikkarte des Lichtempfängers 36 vorgegeben. Dazu werden die Beleuchtungseinheiten 28, 30 auf die Empfangseinheit mit dem Lichtempfänger 36 ausgerichtet. Allgemein können dazu die Elektronikkarte 28, die Beleuchtungselemente 30, die primäre Sendeoptik 56 und/oder die sekundäre Sendeoptik 32 lateral bewegt werden.

Bei der in Figur 4 dargestellten Ausführungsform wird zur Ausrichtung der Beleuchtungseinheiten 28, 30 der schwenkbare Spiegel 52 verschwenkt, bis der ausgeleuchtete Bereich dem Lesefeld des Lichtempfängers 36 entspricht. Diese Ausführungsform hat den weiteren Vorteil, dass über reine Sendestrahlfaltung eine sehr kompakte Bauform ermöglicht wird. Dennoch sind die Beleuchtungselemente 30 direkt an den Grundkörper 26 angebunden, können somit leicht montiert und über Wärmeabfuhr durch den Grundkörper 26 gekühlt werden. Da nur der Sendestrahl über die Spiegel 52, 54 geführt wird, ist deren Oberflächenqualität für die Empfangsseite und somit die Bildqualität nicht relevant, so dass verhältnismäßig einfache und kostengünstige Spiegelelemente eingesetzt werden können.

Es ist sowohl möglich, ein gemeinsames optisches Ausrichtsystem allen Beleuchtungseinheiten 28, 30 zuzuordnen, als auch mehrere optische Ausrichtsysteme, insbesondere kleine Spiegel, für einzelne oder mehrere Beleuchtungseinheiten 28, 30 vorzusehen.

## Patentansprüche

1. Kamerabasierter Codeleser (10) mit einem Bildsensor, der ein zeilenförmiges Lesefeld (18) zur Aufnahme einer Bildzeile aufweist, mit einer Beleuchtungseinheit (28, 30) zur Ausleuchtung des Lesefeldes (18), mit einer Auswertungseinheit (46), die dafür ausgebildet ist, nacheinander aufgenommene Bildzeilen zu einem Bild zusammenzufügen, und mit einer Decodiereinheit (48) zum Auffinden und Decodieren von Codeinformationen in dem Bild,
**gekennzeichnet durch**
einen langgestreckten Grundkörper (26) mit mehreren daran montierten Einzelbildsensoren (32), die jeweils ein zeilenförmiges Einzellesefeld (18a-d) aufweisen und die gemeinsam den Bildsensor bilden, indem sie so zueinander orientiert und angeordnet sind, dass sich die Einzellesefelder (18a-d) zu dem zeilenförmigen Lesefeld (18) überlagern.

2. Codeleser (10) nach Anspruch 1,
wobei die Auswertungseinheit (46) dafür ausgebildet ist, Bilddaten der Einzelbildsensoren (32) zu einer Bildzeile zusammenzufügen.

3. Codeleser (10) nach Anspruch 1 oder 2,
wobei die Einzelbildsensoren (32) eine Vielzahl von zu einer Zeile angeordneten Pixelelementen aufweisen
oder wobei die Einzelbildsensoren (32) eine Vielzahl von zu einer Matrix angeordneten Pixelelementen aufweisen und die Auswertungseinheit (46) dafür ausgebildet ist, in einem Einlernmodus eine in einer Zeile angeordnete Teilmenge der Pixelelemente auszuwählen und im Betrieb nur Bilddaten der ausgewählten Pixelelemente zu verwenden.

4. Codeleser (10) nach Anspruch 3,
wobei die Einzelbildsensoren (32) voneinander gleichmäßig beabstandet derart auf dem Grundkörper (26) montiert sind, dass die Zeilen eine gemeinsame Linie bilden.

5. Codeleser (10) nach einem der vorhergehenden Ansprüche,
wobei die Beleuchtungseinheit (28, 30) eine Elektronikkarte (28) mit einer Vielzahl von Beleuchtungselementen (30) aufweist, insbesondere LEDs, und wobei die Elektronikkarte (28) direkt auf dem Grundkörper (26) montiert ist.

6. Codeleser (10) nach einem der vorhergehenden Ansprüche,
wobei die Beleuchtungseinheit (28, 30) eine anamorphotische Sendeoptik (32) aufweist, insbesondere eine oder mehrere Zylinderlinsen (34), um das Licht auf das zeilenförmige Lesefeld (18) zu bündeln.

7. Codeleser (10) nach einem der vorhergehenden Ansprüche,
wobei die Beleuchtungseinheit (28, 30) mindestens ein verstellbares optisches Element (52) aufweist , insbesondere einen beweglichen Spiegel, um den von der Beleuchtungseinheit (28, 30) ausgeleuchteten Bereich auf das zeilenförmige Lesefeld auszurichten.

8. Codeleser (10) nach einem der vorhergehenden Ansprüche,
wobei die Einzelbildsensoren (32) jeweils eine fokussierbare Empfangsoptik 38, 40, 42) aufweisen, und wobei insbesondere die Empfangsoptiken (38) einen Tubus aufweisen, der den Grundkörper (26) durchdringt.

9. Codeleser (10) nach Anspruch 8,
wobei die Empfangsoptik (38, 40, 42) eine Autofokuseinheit (40, 42) mit einem optischen Element (42), insbesondere einem Spiegel, an einer Schwinge (40) aufweist, wobei durch Verschwenken der Schwinge (40) die Bildschnittweite oder Brennweite der Empfangsoptik (38, 40, 42) veränderbar ist, und wobei die Schwinge (40) über deren Lagerpunkte direkt an dem Grundkörper (26) gehaltert ist.

10. Codeleser (10) nach Anspruch 8 oder 9,
wobei die Auswertungseinheit (46) dafür ausgebildet ist, die Fokussierung der Empfangsoptiken (38, 40, 42) einzeln einzustellen, insbesondere anhand eines vorgegebenen Höhenprofils.

11. Codeleser (10) nach einem der vorhergehenden Ansprüche,
wobei der Grundkörper (26) als Kühlkörper ausgebildet ist.

12. Verfahren zur justierten Herstellung eines kamerabasierten Codelesers (10) mit einem Bildsensor zur Erfassung einer Bildzeile in einem zeilenförmigen Lesefeld (18), mit einer Beleuchtungseinheit (28, 30) zur Ausleuchtung des Lesefeldes (18), mit einer Auswertungseinheit (46) zum Zusammenfügen eines Bildes aus einer Vielzahl von Bildzeilen und mit einer Decodiereinheit (48) zum Auffinden und Decodieren von Codeinformationen in dem Bild, insbesondere eines Codelesers (10) nach einem der vorhergehenden Ansprüche,
**dadurch gekennzeichnet,**
**dass** mindestens eine Elektronikkarte (28) der Beleuchtungseinheit (28, 30) mit einer Vielzahl von Beleuchtungselementen (30) direkt auf einem langgestreckten Grundkörper (26) angebracht wird und dass mehrere Einzelbildsensoren (32), die jeweils ein zeilenförmiges Einzellesefeld (18a-d) aufweisen, bei aktivierter Beleuchtungseinheit (28, 30) auf dem Grundkörper (26) derart zueinander orientiert und angeordnet montiert werden, dass sich die Einzellesefelder (18a-d) zu einem zeilenförmigen Lesefeld (18) überlagern, welches den von der Beleuchtungseinheit (28, 30) ausgeleuchteten Bereich erfasst, und somit die Einzelbildsensoren (32) gemeinsam den Bildsensor bilden.

13. Verfahren nach Anspruch 12,
wobei jeweils eine fokusverstellbare Empfangsoptik (38, 40, 42) durch eine Öffnung des Grundkörpers (26) gesteckt und somit zwischen den Beleuchtungselementen (30) vor jedem Einzelbildsensor (32) angeordnet wird, und wobei der Codeleser (10) in Abstandsrichtung justiert wird, indem eine Fokustabelle für die erforderliche Fokuseinstellung in Abhängigkeit des Abstands eingelernt wird.

14. Verfahren nach Anspruch 12 oder 13,
wobei die Beleuchtungseinheit (28, 30) durch Verstellen eines einstellbaren optischen Elements (52) der Beleuchtungseinheit, insbesondere eines beweglichen Spiegels, auf das zeilenförmige Lesefeld ausgerichtet wird.

15. Verfahren nach einem der Ansprüche 12 bis 14,
wobei die Einzelbildsensoren (32) eine Vielzahl von zu einer Zeile angeordneten Pixelelementen aufweisen und gleichmäßig zueinander beabstandet derart auf dem Grundkörper (26) montiert werden, dass die Pixelelemente aller Einzelbildsensoren (32) eine gemeinsame Linie bilden,
oder wobei die Einzelbildsensoren (32) eine Vielzahl von zu einer Matrix angeordneten Pixelelementen aufweisen, wobei bei aktivierter Beleuchtungseinheit (28, 30) diejenigen Pixelelemente selektiert werden, die Beleuchtungslicht aus dem Lesefeld (18) empfangen, und wobei die Auswertungseinheit (46) die selektierten Pixelelemente speichert, um im Betrieb nur Bilddaten der selektierten Pixelelemente zu verwenden.

## Claims

1. A camera-based code reader (10) with an image sensor having a line-shaped reading area (18) for capturing an image line, with an illumination unit (28, 30) for illuminating the reading area (18), with an evaluation unit (46) configured to compose an image from successively captured image lines, and with a decoding unit (48) for locating and decoding code information in the image,
**characterized by**
an elongated base body (26) with a plurality of individual image sensors (32) mounted thereon, each of the individual image sensors (32) comprising a line-shaped individual reading area (18a-d), and the individual image sensors (32) together forming the image sensor by being oriented and arranged relative to one another so that the individual reading areas (18a-d) overlap to form the line-shaped reading area (18).

2. The code reader (10) according to claim 1,
wherein the evaluation unit (46) is configured to compose an image line from image data of the individual image sensors (32).

3. The code reader (10) according to claim 1 or 2,
wherein the individual image sensors (32) comprise a plurality of pixel elements arranged in a line,
or wherein the individual image sensors (32) comprise a plurality of pixel elements arranged in a matrix, and wherein the evaluation unit (46) is configured to select a subset of the pixel elements arranged in a line during a teach mode, and to use only image data from the selected pixel elements during operation.

4. The code reader (10) according to claim 3,
wherein the individual image sensors (32) are mounted on the base body (26) with an equal spacing to one another so that the lines of pixel elements of the individual image sensors (32) form a common line.

5. The code reader (10) according to any of the preceding claims,
wherein the illumination unit (28, 30) comprises a circuit board (28) having a plurality of illumination elements (30), in particular LEDs, and wherein the circuit board (28) is directly mounted on the base body (26).

6. The code reader (10) according to any of the preceding claims,
wherein the illumination unit (28, 30) comprises anamorphotic transmission optics (32), in particular one or a plurality of cylindrical lenses, to focus the light onto the line-shaped reading area (18).

7. The code reader (10) according to any of the preceding claims,
wherein the illumination unit (28, 30) comprises at least one adjustable optical element (52), in particular a movable mirror, to align the area illuminated by the illumination unit (28, 30) with the line-shaped reading area.

8. The code reader (10) according to any of the preceding claims,
wherein the individual image sensors (32) each comprise focusable reception optics (38, 40, 42), and wherein in particular the reception optics (38, 40, 42) comprise a tube running through the base body (26).

9. The code reader (10) according to claim 8,
wherein the reception optics (38, 40, 42) comprise an autofocus unit (40, 42) having an optical element (42), in particular a mirror, on a lever (40), wherein by pivoting the lever (40) the back focal length or the focal length of the reception optics (38, 40, 42) is variable, and wherein the lever (40) is mounted directly on the base body (26) on its bearing point or bearing points.

10. The code reader (10) according to claim 8 or 9,
wherein the evaluation unit (48) is configured to set the focus of the reception optics (38, 40, 42) individually, in particular based on a predetermined height profile.

11. The code reader (10) according to any of the preceding claims,
wherein the base body (26) is made as a heat sink.

12. A method for manufacturing an adjusted camera-based code reader (10) with an image sensor for capturing an image line in a line-shaped reading area (18), with an illumination unit (28, 30) for illuminating the reading area (18), with an evaluation unit (46) for composing an image from a plurality of image lines, and with a decoding unit (48) for locating and decoding code information in the image, in particular a camera-based code reader (10) according to any of the preceding claims,
**characterized in that**
at least one circuit board (28) of the illumination unit (28, 30) with a plurality of illumination elements (30) is mounted directly on an elongated base body (26), and **in that** a plurality of individual image sensors (32) each having a line-shaped individual reading area (18a-d) are mounted on the base body (26), while the illumination unit (28, 30) is activated, in an orientation and arrangement where the individual reading areas (18a-d) overlap to form the line-shaped reading area (18) so that the reading area (18) captures the area illuminated by the illumination unit (28, 30), the individual image sensors (32) thus commonly forming the image sensor.

13. The method according to claim 12,
wherein focusable reception optics (38, 40, 42) are set through an opening of the base body (26) to be arranged between the illumination elements (30) in front of each individual image sensor (32), and wherein the code reader (10) is adjusted in a distance direction by teaching a focus table comprising the required focus setting in dependence on the distance.

14. The method according to claim 12 or 13,
wherein the illumination unit (28, 30) is aligned with the line-shaped reading area by adjusting an adjustable optical element (52) of the illumination unit (28, 30), in particular a movable mirror.

15. The method according to any of claims 12 to 14,
wherein the individual image sensors (32) comprise a plurality of pixel elements arranged in a line and are mounted on the base body (26) with an equal spacing from one another so that the pixel elements of all individual image sensors (32) form a common line,
or wherein the individual image sensors (32) comprise a plurality of pixel elements arranged in a matrix, and wherein, while the illumination unit (28, 30) is activated, those pixel elements are selected which receive illumination light from the reading area (18), and wherein the evaluation unit (46) stores the selected pixel elements in order to use only image data from the selected pixel elements during operation.

## Revendications

1. Lecteur de code (10) basé sur une caméra, comprenant un capteur d'image qui comprend un champ de lecture (18) en forme de ligne pour enregistrer une ligne d'image, comprenant une unité d'éclairage (28, 30) pour éclairer le champ de lecture (18), comprenant une unité d'évaluation (46) qui est réalisée pour assembler des lignes d'images enregistrées les unes après les autres en donnant une image, et comprenant une unité de décodage (48) pour trouver et décoder des informations de code dans l'image,
**caractérisé par** un corps de base étiré en longueur (26) avec plusieurs capteurs d'images individuels (32) montés sur celui-ci, lesquels comprennent chacun un champ de lecture individuel (18a-d) en forme de ligne et forment conjointement le capteur d'image, du fait que ceux-ci sont orientés et agencés les uns par rapport aux autres de telle façon que les champs de lecture individuels (18a-d) se chevauchent pour donner le champ de lecture en forme de ligne (18).

2. Lecteur de code (10) selon la revendication 1,
dans lequel l'unité d'évaluation (46) est réalisée pour assembler des données images des capteurs d'images individuels (32) pour donner une ligne d'image.

3. Lecteur de code (10) selon la revendication 1 ou 2,
dans lequel les capteurs d'images individuels (32) comprennent une pluralité d'éléments de pixels agencés en une ligne
ou dans lequel les capteurs d'images individuels (32) comprennent une pluralité d'éléments de pixels agencés en une matrice et l'unité d'évaluation (46) est réalisée, dans un mode d'apprentissage, pour sélectionner un groupe partiel des éléments de pixels agencés dans une ligne et, en fonctionnement, pour utiliser uniquement des données images des éléments de pixels sélectionnés.

4. Lecteur de code (10) selon la revendication 3,
dans lequel les capteurs d'images individuels (32) sont montés sur le corps de base (26) à distance régulière les uns des autres de telle façon que les lignes forment un alignement commun.

5. Lecteur de code (10) selon l'une des revendications précédentes,
dans lequel l'unité d'éclairage (28, 30) comprend une carte électronique (28) avec une pluralité d'éléments d'éclairage (30), en particulier des DEL, et dans lequel la carte électronique (28) est montée directement sur le corps de base (26).

6. Lecteur de code (10) selon l'une des revendications précédentes,
dans lequel l'unité d'éclairage (28, 30) comprend une optique d'émission (32) anamorphotique, en particulier une ou plusieurs lentilles cylindriques (34) afin de focaliser la lumière sur le champ de lecture (18) en forme de ligne.

7. Lecteur de code (10) selon l'une des revendications précédentes,
dans lequel l'unité d'éclairage (28, 30) comprend au moins un élément optique réglable (52), en particulier un miroir mobile, afin d'aligner la zone éclairée par l'unité d'éclairage (28, 30) vers le champ de lecture en forme de ligne.

8. Lecteur de code (10) selon l'une des revendications précédentes,
dans lequel les capteurs d'images individuels (32) comprennent chacun une optique de réception (38, 40, 42) susceptible d'être focalisée, et dans lequel les optiques de réception (38) comprennent en particulier un tube qui traverse le corps de base (26).

9. Lecteur de code (10) selon la revendication 8,
dans lequel l'optique de réception (38, 40, 42) comprend une unité d'autofocalisation (40, 42) avec un élément optique (42), en particulier un miroir, sur une bascule (40), et dans lequel la largeur du plan image ou la distance focale de l'optique de réception (38, 40, 42) peut être modifiée en faisant pivoter la bascule (40), et dans lequel la bascule (40) est supportée directement sur le corps de base (26) via ses points de palier.

10. Lecteur de code (10) selon la revendication 8 ou 9,
dans lequel l'unité d'évaluation (46) est réalisée pour régler individuellement la focalisation des optiques de réception (38, 40, 42), en particulier au moyen d'un profil de hauteur prédéterminé.

11. Lecteur de code (10) selon l'une des revendications précédentes,
dans lequel le corps de base (26) est réalisé comme un corps de refroidissement.

12. Procédé pour la fabrication avec ajustement d'un lecteur de code (10) basé sur une caméra, comprenant un capteur d'image pour saisir une ligne d'image dans un champ de lecture (18) en forme de ligne, comprenant une unité d'éclairage (28, 30) pour éclairer le champ de lecture (18), comprenant une unité d'évaluation (36) pour assembler une image à partir d'une pluralité de lignes d'images, et une unité de décodage (48) pour trouver et décoder des informations de code dans l'image, en particulier la fabrication d'un lecteur de code (10) selon l'une des revendications précédentes,
**caractérisé en ce que**
au moins une carte électronique (28) de l'unité d'éclairage (28, 30) avec une pluralité d'éléments d'éclairage (38) est montée directement sur un corps de base (26) étiré en longueur, et **en ce que** plusieurs capteurs d'images individuels (32), qui présentent chacun un champ de lecture individuel (18a-d) en forme de ligne, lorsque l'unité d'éclairage (28, 30) est activée, sont montés en étant orientés et agencés les uns par rapport aux autres sur le corps de base (26) de telle façon que les champs de lecture individuels (18a-d) se chevauchent pour donner un champ de lecture (18) en forme de ligne, qui capte la zone éclairée par l'unité d'éclairage (28, 30) et les capteurs d'images individuels (32) forment ainsi conjointement le capteur d'image.

13. Procédé selon la revendication 12,
dans lequel une optique de réception (38, 40, 42) respective à foyer réglable est enfichée à travers une ouverture de corps de base (26) et est ainsi agencée entre les éléments d'éclairage (30) devant chaque capteur d'image individuel (32), et dans lequel le lecteur de code (10) est ajusté dans la direction de la distance en procédant à l'apprentissage d'une table de focalisation pour le réglage de focalisation nécessaire en fonction de la distance.

14. Procédé selon la revendication 12 ou 13,
dans lequel l'unité d'éclairage (28, 30) est orientée vers le champ de lecture en forme de ligne par réglage d'un élément optique réglable (52) de l'unité d'éclairage, en particulier d'un miroir mobile.

15. Procédé selon l'une des revendications 12 à 14,
dans lequel les capteurs d'images individuels (32) comprennent une pluralité d'éléments de pixels agencés en une ligne, et sont montés sur le corps de base (26) avec écartement régulier les uns par rapport aux autres de telle façon que les éléments de pixels de tous les capteurs d'images individuels (32) forment un alignement commun,
ou dans lequel les capteurs d'images individuels (32) comprennent une pluralité d'éléments de pixels agencés en une matrice, et lorsque l'unité d'éclairage est activée (28, 30), on sélectionne ceux des éléments de pixels qui reçoivent la lumière d'éclairage provenant du champ de lecture (18), et dans lequel l'unité d'évaluation (46) mémorise les éléments de pixels sélectionnés afin d'utiliser en fonctionnement uniquement des données images des éléments de pixels sélectionnés.
